# EUROPEAN PATENT APPLICATION

(11) **EP 3 296 043 A1**
(43) Date of publication of application: **21.03.2018**
(21) Application number: 16796359.4
(22) Date of filing: 11.05.2016
(51) Int. Cl.: B22F 3/105, B22F 1/00, B22F 3/16, B29C 67/04, B33Y 10/00, B33Y 30/00, B33Y 70/00, B82Y 30/00

(54) **POWDER MATERIAL, METHOD FOR PRODUCING THREE-DIMENSIONAL MOLDED ARTICLE, AND THREE-DIMENSIONAL MOLDING DEVICE**

(30) Priority: 15.05.2015 JP 2015100061
(71) Applicant: Konica Minolta, Inc., Tokyo 100-7015 (JP)
(72) Inventor: ISOBE, Kazuya, Tokyo 100-7015 (JP); TAKENOUCHI, Shigeki, Tokyo 100-7015 (JP)
(74) Representative: Henkel, Breuer & Partner
(86) International application number: PCT/JP2016/064010
(87) International publication number: WO 2016/185966

(57) **Abstract**

The objective of the present invention is to provide a powder material for a powder bed fusion method, said powder material making it possible to easily sinter or fuse metal particles included in the powder material using a low-energy laser regardless of the material constituting the powder material. The powder material is used in the production of a three-dimensional molded article by selectively irradiating a thin layer of the powder material, which includes metal particles, with a laser light, forming molded article layers formed by sintering or fusing the metal particles, and laminating the molded article layers. The powder material includes porous metal particles formed by binding metal nanoparticles with a binder, and the BET specific surface area of the powder material is 5.0 × 10⁶ - 1.1 × 10⁸ (m²/m³), inclusive.

## Description

### Technical Field

The present invention relates to a powder material, a method of fabricating a three-dimensional object, and a three-dimensional fabrication apparatus.

### Background Art

A three-dimensional fabrication apparatus can relatively easily fabricate a three-dimensional object having a complex shape, and thus is employed in applications, such as creation of a prototype for confirming the shape or properties of a final product. In this case, a material for fabricating a three-dimensional object is also appropriately selected corresponding to types of final products and properties to be confirmed in prototypes, for example. When a final product is a metallic mechanical part, for example, a metal material is used as a prototype material in some cases.

A powder bed fusion method is known as a method of fabricating a three-dimensional object from a metal material (see Patent Literature (hereinafter, abbreviated as PTL) 1 and PTL 2, for example). In the powder bed fusion method, one of finely sliced layers in the thickness direction of a three-dimensional object (hereinafter, also simply referred to as "object layer") is formed by evenly spreading a powder material containing metal particles to form a thin layer, and irradiating a desired position on the thin layer with a laser to selectively sinter or fuse the metal particles contained in the powder material. On the thus-formed layer, the following object layer is formed by further spreading the powder material, and irradiating with the laser to selectively sinter or fuse the metal particles. By repeating the above procedure while laminating object layers, a three-dimensional object having a desired shape is fabricated.

When a three-dimensional object is fabricated by a powder bed fusion method, the output power of a laser is set so that metal particles are sintered or fused satisfactorily. For example, when a powder material containing aluminum as a main component is used, metal particles are known to be sintered or fused satisfactorily by setting the output power of a laser at 30 W or higher (see PTL 3 and Non-Patent Literature (hereinafter, abbreviated as NPL) 1, for example).

A powder bed fusion method features a high fabrication accuracy and high adhesive strength between laminated layers. Accordingly, a powder bed fusion method can be employed to manufacture final products as well as to create prototypes.

### Citation List

### Patent Literature

PTL 1
   Japanese Patent Application Laid-Open No. 2002-249804
PTL 2
   Japanese Patent Application Laid-Open No. H10-88201
PTL 3
   Japanese Patent Application Laid-Open No. 2011-021218

### Non-Patent Literature

NPL 1
Hideki Kyogoku, Saikin no Re̅za-sekisou Zoukei Gijutsu no Kaihatsu Doukou (Recent research trend of laser additive manufacturing technology), Kinki University Research Institute of Fundamental Technology for Next Generation, vol. 1, 2010, pp.69-76

### Summary of Invention

### Technical Problem

Various metal materials are used to manufacture final products. Quantities of laser energy required to sinter or fuse metal particles vary depending on metal materials. Metal materials having a high emissivity with respect to a laser, such as copper and aluminum, for example, exhibit low absorption of laser energy. Accordingly, irradiation with a higher-energy laser is required to sinter or fuse metal particles containing such metal materials. When a three-dimensional object is fabricated by a powder bed fusion method using these metal materials, there are problems in which a higher-energy laser results in increased fabrication costs, complex configurations of fabrication apparatuses, and failed bonding of metal particles, for example.

In view of the above-mentioned problems, one object of the present invention is to provide a powder material, for a powder bed fusion method, that can facilitate sintering or fusing of metal particles contained in the powder material regardless of a material for the powder material. Another object of the present invention is to provide a method of fabricating a three-dimensional object using the powder material and an apparatus for fabricating a three-dimensional object.

### Solution to Problem

A first aspect of the present invention relates to the following powder material.
[1] A powder material used for fabrication of a three-dimensional object by selectively irradiating a thin layer of a powder material containing metal particles with a laser beam to form an object layer through sintering or fusing of the metal particles, and laminating the object layer, the powder material including:
   porous metal particles each formed from metal nanoparticles bonded to each other with a binder, in which
   the powder material has a BET specific surface area of 5.0 × 10⁶ (m²/m³) or more and 1.1 × 10⁸ (m²/m³) or less.
[2] The powder material according to [1], in which the metal particles contain a metal material having an emissivity of 0.30 or less with respect to 1.07 µm-wavelength light.
[3] The powder material according to [1] or [2], in which the metal nanoparticles have an average particle size of 100 nm or less.
[4] The powder material according to any one of [1] to [3], in which the binder includes at least one component selected from the group consisting of a thermoplastic resin, a thermosetting resin, and a protein that adsorbs to a metal.
   A second aspect of the present invention relates to the following method of fabricating a three-dimensional object.
[5] A method of fabricating a three-dimensional object, including:
   forming a thin layer of the powder material according to any one of [1] to [4];
   forming an object layer by selectively irradiating the thin layer with a laser beam to sinter or fuse the metal particle contained in the powder material; and
   laminating the object layers by repeating the forming of the thin layer and the forming of the object layer in this order a plurality of times.

   A third aspect of the present invention relates to the following three-dimensional fabrication apparatus.
[6] A three-dimensional fabrication apparatus including:
   a build stage;
   a thin layer forming section that forms a thin layer of the powder material according to any one of [1] to [4] on the build stage;
   a laser irradiation section that irradiates the thin layer with a laser to form an object layer by sintering or fusing the metal particles;
   a stage support section that supports the build stage such that a vertical position of the build stage is changed; and
   a control section that controls the thin layer forming section, the laser irradiation section, and the stage support section such that the object layer is repeatedly formed and laminated.

### Advantageous Effects of Invention

The present invention provides a powder material, for a powder bed fusion method, that can facilitate sintering or fusing of metal particles contained in the powder material by a low-energy laser, regardless of a material for the powder material, as well as provides a method of fabricating a three-dimensional object using the powder material, and an apparatus for fabricating a three-dimensional object.

### Brief Description of Drawings

FIG. 1 is a side view schematically illustrating the configuration of a three-dimensional fabrication apparatus according to an embodiment of the present invention; and
FIG. 2 illustrates a main part of a control system of the three-dimensional fabrication apparatus according to the embodiment of the present invention.

### Description of Embodiments

To solve the above-mentioned problems, the present inventors performed extensive examination of and experiments on powder materials used for a powder bed fusion method. As a result, the present inventors have found that a powder material including porous metal particles each formed from metal nanoparticles bonded to each other with a binder enables the metal particles contained in the powder material to be sintered or fused even by a low-energy laser, and thus made the present invention.

Although details about the mechanism of achieving low-energy sintering or fusing of metal particles are unknown, the reasons are presumably as follows. Porous metal particles can significantly increase surface areas of particles and thus reflect a laser a plurality of times inside fine holes (fine pores), thereby extending an optical path length of the irradiating laser. This allows absorption of the laser reflected inside fine pores a plurality of times and thus enhances an absorption rate of laser energy by metal particles, compared to a case in which non-porous metal particles are used. Since the metal particles can absorb more energy of the irradiating laser, sintering or fusing of the metal particles is presumably possible even at a lower energy of the irradiating laser.

Meanwhile, when a metal compound is nano-sized, the melting point is known to lower. In the above-described porous metal particles formed from bonded metal nanoparticles, the melting point of the metal nanoparticles that constitute the metal particles becomes lower than the non-porous metal, and thus the melting point of the porous metal particles also lowers. As a result, sintering or fusing of the metal particles even at a low energy of the irradiating laser becomes possible.

Porous metal particles increase a specific surface area of a powder material containing the metal particles. Further investigation by the present inventors has revealed that a powder material having a BET specific surface area of 5.0 × 10⁶ (m²/m³) or more and 1.1 × 10⁸ (m²/m³) or less facilitates sintering or fusing of metal particles regardless of types of metal materials, and thus fabrication of a three-dimensional object by a powder bed fusion method becomes possible.

In the following, representative embodiments of the present invention will be described in detail.

### 1. Powder Materials

The embodiment pertains to a powder material used for fabrication of a three-dimensional object by selectively irradiating a thin layer of a powder material containing metal particles with a laser beam such that an object layer is formed through sintering or fusing of the metal particles, and laminating the object layer (hereinafter, also simply referred to as "powder material"). The powder material includes porous metal particles formed from metal nanoparticles bonded to each other with a binder, and has a BET specific surface area of 5.0 × 10⁶ (m²/m³) or more and 1.1 × 10⁸ (m²/m³) or less.

When metal particles are porous, sintering or fusing of the metal particles becomes possible even by irradiation with a lower-energy laser, compared to a case in which non-porous metal particles are used.

As used herein, "porous" means that a metal material has a plurality of fine pores on the surface or inside. As used herein, "a powder material includes porous metal particles" means, for example, that a plurality of fine pores are observed on the metal particles in an image of a certain amount of the powder material obtained by using a scanning electron microscope (SEM).

By setting the BET specific surface area to 5.0 × 10⁶ (m²/m³) or more, an optical path length of a laser is extended satisfactorily, and thus sintering or fusing of metal particles becomes possible even by irradiation with a lower-energy laser compared to a case in which non-porous metal particles are used. Meanwhile, when the BET specific surface area is less than 5.0 × 10⁶ (m²/m³), sintering or fusing of metal particles by irradiation with a low-energy laser becomes difficult since satisfactory optical path length of the laser is not ensured. Further, when the BET surface area is more than 1.1 × 10⁸ (m²/m³), although metal particles are partially sintered or fused even by irradiation with a low-energy laser, satisfactory sintering or fusing becomes difficult.

In view of the above, the BET specific surface area of a powder material is preferably 2.0 × 10⁷ (m²/m³) or more and 1.1 × 10⁸ (m²/m³) or less and more preferably 5.0 × 10⁷ (m²/m³) or more and 1.1 × 10⁸ (m²/m³) or less.

In the present specification, a BET specific surface area is a measured value of a powder material in accordance with JIS Z 8830 (measurement method of adsorbed gas amount: carrier gas method, adsorptive: nitrogen gas, data analysis method: single-point or multipoint method). The BET specific surface area can be measured, for example, using a commercial "FlowSorb" specific surface area/fine pore analyzer (from Shimadzu Corporation).

The BET specific surface area of a powder material can be set to the above range by adjusting the particle size of metal nanoparticles that constitute porous metal particles, or the type or the amount of a binder.

The powder material may contain non-porous metal particles as long as the BET specific surface area of the powder material is 5.0 × 10⁶ (m²/m³) or more and 1.1 × 10⁸ (m²/m³) or less.

The powder material may further contain a material other than metal particles, such as a laser absorber or a flow agent, provided that sintering or fusing by laser irradiation is not hindered.

### 1-1. Porous Metal Particles

Porous metal particles are metal particles having fine pores. The pore size and volume ratio of the metal particles can be appropriately set as long as the BET specific surface area of a powder material falls into the above-mentioned range.

A metal material of the metal particles may be any metal material as long as it has an emissivity of 0.95 or less with respect to 1.07 µm-wavelength light. Examples of the metal materials contained in the metal particles include aluminum, chromium, cobalt, copper, gold, iron, magnesium, silicon, molybdenum, nickel, palladium, platinum, rhodium, silver, tin, titanium, tungsten, zinc, and alloys containing these elements. Examples of the alloys include brass, Inconel, Monel, nichrome, steel, and stainless steel. These metal materials may be used alone or in combination.

Metal particles containing a metal material having an emissivity of 0.30 or less with respect to 1.07 µm-wavelength light, among the above metals, exhibit low laser absorption in the bulk form, and thus sintering or fusing of the metal particles is difficult unless laser energy is increased. When the metal particles are porous, however, an absorption rate of laser energy by the metal particles can be enhanced. This facilitates sintering or fusing of the particles even containing such a metal by a lower-energy laser (laser output power of 30 W or lower, for example), and thus three-dimensional fabrication by a powder bed fusion method becomes possible at low costs using simple apparatuses. The above-described advantageous effects become noticeable in metal particles containing a metal material having an emissivity of 0.15 or less with respect to 1.07 µm-wavelength light, and further noticeable in metal particles containing a metal material having an emissivity of 0.10 or less with respect to 1.07 µm-wavelength light.

Examples of the metal materials having an emissivity of 0.30 or less with respect to 1.07 µm-wavelength light include copper, aluminum, and Inconel. Examples of the metal materials having an emissivity of 0.15 or less with respect to 1.07 µm-wavelength light include copper and aluminum. Examples of the metal materials having an emissivity of 0.10 or less with respect to 1.07 µm-wavelength light include copper.

Meanwhile, from a viewpoint of facilitating sintering or fusing of metal particles and thus three-dimensional fabrication by a lower-energy laser, the emissivity of the metal material with respect to 1.07 µm-wavelength light is preferably 0.35 or more, more preferably 0.50 or more, and further preferably 0.80 or more.

Examples of the metal materials having an emissivity of 0.35 or more with respect to 1.07 µm-wavelength light include chromium, iron, lead, nickel, steel, titanium, tungsten, and zinc. Examples of the metal materials having an emissivity of 0.50 or more with respect to 1.07 µm-wavelength light include steel, titanium, and zinc. Examples of the metal materials having an emissivity of 0.80 or more with respect to 1.07 µm-wavelength light of 0.50 or more include steel.

The average particle size of porous metal particles is preferably 10 µm or more and 60 µm or less. By setting the average particle size to 10 µm or more, easy handling of a powder material during fabrication of a three-dimensional object becomes possible due to satisfactory flowability of the powder material. Meanwhile, by setting the average particle size to 60 µm or less, fabrication of a highly accurate three-dimensional object becomes possible. In view of the above, the average particle size of porous metal particles is more preferably 20 µm or more and 50 µm or less and further preferably 30 µm or more and 40 µm or less.

As used herein, the average particle size of porous metal particles or metal nanoparticles described means a volume-average particle size measured by a dynamic light scattering method. The volume-average particle size can be measured using a "HELOS" laser diffraction-type particle size analyzer equipped with a wet disperser (from Sympatec GmbH). Alternatively, the average particle size of porous metal particles or metal nanoparticles described hereinafter may be obtained as an average value of measured particle sizes for randomly selected 20 porous metal particles or metal nanoparticles in a microscope image obtained by using a scanning electron microscope (SEM) or a transmission electron microscope (TEM).

### 1-1-1. Metal Nanoparticles

The porous metal particles are each formed from metal nanoparticles bonded to each other with a binder. As used herein, "metal nanoparticles" mean metal particles having an average particle size of less than 1 µm. The average particle size of metal nanoparticles is preferably 400 nm or less, more preferably 100 nm or less, further preferably 50 nm or less, from a viewpoint of further extending an optical path length and lowering the melting point of the metal particle.

The metal nanoparticles are composed of a metal material contained in the above-described metal particles. The metal nanoparticles may be composed of a single metal material or a combination of two or more metal materials, but is preferably composed of a single metal material, from a viewpoint of facilitating manufacture of the metal particles.

Examples of commercial aluminum-based metal nanoparticles include "Alpaste WJP-U75C," "Alpaste WE1200," "Alpaste WXM7675," "Alpaste WXM0630," "Alpaste WXM0650," "Alpaste WXM0620," "1110W," and" 2172SW" (all from Toyo Aluminium K.K., "Alpaste" is a registered trademark of the firm), "Aluminium Paste AW," and "Aluminium Paste FW" (both from Asahi Kasei Chemicals Corporation). The aluminum-based metal nanoparticles may be a stearic acid-adsorbed leafing type or a non-leafing type.

Examples of commercial copper-based metal nanoparticles include "CUX-R" (from Mitsuboshi Belting Ltd., "CUX" is a registered trademark of the firm), "ACP-100" (from Asahi Chemical Research Laboratory Co., Ltd.), "INCu 30-50 CHX," and "INCu 80-50 CHX" (both from IOX Co., Ltd.).

The metal nanoparticles may be waterproofed. Waterproofing can be performed by a commonly known method. Water resistance can be imparted to the metal nanoparticles, for example, by immersing the metal nanoparticles in a phosphoric acid-containing solution to attach a compound having a phosphoric acid group to the metal nanoparticles. Examples of commercial waterproofed aluminum-based metal nanoparticles include "Alpaste WXM0650" and "Alpaste WXM0620" (both from Toyo Aluminium K.K.).

### 1-1-2. Binders

A material for the binder may be any material as long as it has a viscosity that is sufficient for bonding metal nanoparticles. The binder is preferably an organic material from a viewpoint of vaporizing/diffusing the binder upon laser irradiation and eliminating residual binder from a three-dimensional object. Examples of the organic materials that can be used as the binder include a polymer material that adsorbs to a metal. Examples of the polymer materials that adsorb to a metal include a thermoplastic resin, a thermosetting resin, and a protein that adsorbs to a metal. The binder may be at least one component selected from the group consisting of the above-mentioned materials, and is preferably a thermoplastic resin or a thermosetting resin, from a viewpoint of further enhancing bonding properties of metal nanoparticles.

Examples of the thermoplastic resins and the thermosetting resins include a polyvinyl resin, a polyacrylic resin, a polyester resin, polyurethane resin, an epoxy resin, and a silicone resin. The thermoplastic resin or the thermosetting resin may be modified with a functional group having a polarity opposite to the metal nanoparticles. Examples of the functional groups having a polarity opposite to the metal nanoparticles include an amine group.

Examples of the proteins that adsorbs to a metal includes casein, gelatin, and a protein isolated/extracted from soybean. These materials for the binder may be used alone or in combination.

### 1-1-3. Method of Manufacturing Metal Particles

The metal particles can be manufactured by bonding the metal nanoparticles to each other with the binder. For example, a binder is added into a dispersion (in which metal nanoparticles are dispersed in water), and mixed while stirring to form an aqueous solution of a composite composed of the metal nanoparticles and the binder. The aqueous solution of the composite is then stirred at a temperature equal to or higher than the glass transition temperature of the binder so as to promote fusing of the metal nanoparticles and the binder, and subsequently the composite obtained through filtering is washed and dried to yield metal particles.

A binder to be added preferably has a high viscosity from a viewpoint of further enhancing bonding properties of metal nanoparticles, and is preferably a latex in which a thermoplastic resin or a thermosetting resin is dispersed in a dispersion medium, for example.

### 1-2. Other Materials

### 1-2-1. Laser Absorbers

The powder material may further contain a laser absorber from a viewpoint of more efficiently converting photoenergy of a laser to thermal energy. The laser absorber may be any material as long as it absorbs a laser of an applied wavelength and generates heat. Examples of such laser absorbers include carbon powders, nylon resin powders, a pigment, and a dye. These laser absorbers may be used alone or in combination.

The amount of the laser absorber can be appropriately as long as sintering or fusing of metal particles is facilitated, and can be, for example, more than 0 mass% and less than 3 mass%, based on the total mass of the powder material.

### 1-2-2. Flow Agents

The powder material may further contain a flow agent from a viewpoint of enhancing flowability of the powder material and achieving easy handling of the powder material during fabrication of a three-dimensional object. The flow agent may be any material as long as it has a small friction coefficient and self-lubricating properties. Examples of such flow agents include silicon dioxide and boron nitride. These flow agents may be used alone or in combination.

The amount of the flow agent can be appropriately set as long as the flowability of the powder material is enhanced and the metal particles are sintered or fused satisfactorily, and can be, for example, more than 0 mass% and less than 2 mass%, based on the total mass of the powder material.

### 1-3. Method of Manufacturing Powder Materials

The metal particles per se can be the powder material. When the powder material includes the above-described other materials, the powder material may be obtained by stirring/mixing powders of the other materials and the metal particles, or may be obtained by further adding the other materials into the above-mentioned dispersion at any stage of the method of manufacturing the metal particles.

### 2. Method of Fabricating Three-dimensional Objects

The embodiment pertains to a method of fabricating a three-dimensional object using the above-described powder material. The method of the embodiment can be performed in substantially the same manner as a common powder bed fusion method except for using the above-described powder material. Specifically, the method of the embodiment includes steps of: (1) forming a thin layer of the powder material; (2) forming an object layer by selectively irradiating the thin layer with a laser beam to sinter or fuse the metal particle contained in the powder material; and (3) laminating the object layers by repeating steps 1 and 2 in this order a plurality of times. A final three-dimensional object is fabricated by forming one of object layers that constitute the three-dimensional object in step 2, and laminating the following layers of the three-dimensional object by repeating steps 1 and 2 in step 3.

### 2-1. Step to Form Thin Layer of Powder Material (step 1)

In this step, a thin layer of the powder material is formed. For example, the powder material supplied from a powder supply section is spread evenly on a build stage by a recoater. The thin layer may be formed directly on the build stage, or may be formed on an already spread powder material or on an already formed object layer.

The thickness of the thin layer is the same as the thickness of the object layer. The thickness of the thin layer can be set in accordance with the accuracy of a three-dimensional object to be fabricated, and is typically 0.05 mm or more and 1.0 mm or less. By setting the thickness of the thin layer to 0.05 mm or more, upon laser irradiation for forming the following layer, sintering or fusing of metal particles in the underneath layer can be prevented. By setting the thickness of the thin layer to 1.0 mm or less, satisfactory sintering or fusing of metal particles contained in a powder material (that forms the thin layer) over the entire thickness direction can be achieved by transferring laser energy to the lower portion of the thin layer. In view of the above, the thickness of the thin layer is preferably 0.05 mm or more and 0.50 mm or less, more preferably 0.05 mm or more and 0.30 mm or less, further preferably 0.05 mm or more and 0.10 mm or less. Further, from a viewpoint of satisfactorily sintering or fusing metal particles over the entire thickness direction of the thin layer and suppressing cracking between laminated layers, the thickness of the thin layer is preferably set so that a difference between the thickness and a beam spot diameter of a laser described hereinafter becomes 0.10 mm or less.

### 2-2. Step to Form Object Layers by Sintering or Fusing Metal Particles (step 2)

In this step, the formed thin layer of the powder material is selectively irradiated, at the positions where an object layer is to be formed, with a laser to sinter or fuse the metal particles at the irradiated positions. Sintered or fused metal particles melt with adjacent powders to form a sintered or fused body, thereby forming an object layer. On this occasion, metal particles that have received laser energy are sintered or fused with the metal material in an already formed layer, resulting in adhesion between adjacent layers.

The wavelength of a laser may be set within a range that is absorbed by the metal material for the metal particles. A difference between the wavelength of a laser and a wavelength at which the metal materials have the highest absorptance is preferably 500 nm or less. The wavelength of a laser, for example, is preferably 0.8 µm or longer and 12 µm or shorter, more preferably 0.8 µm or longer and 3.0 µm or shorter, further preferably 0.8 µm or longer and 1.6 µm or shorter.

The output power of a laser may be set within a range in which the metal material for the metal particles is satisfactorily sintered or fused at a scanning speed of the laser described hereinafter. Specifically, the laser output power can be 5.0 W or higher and 60 W or lower. The powder material facilitates sintering or fusing of the metal particles even by a low-energy laser regardless of the type of metal material, and thus fabrication of a three-dimensional object becomes possible. The output power of a laser is preferably 30 W or lower, more preferably 20 W or lower, from a viewpoint of lowering laser energy, lowering fabrication costs, and simplifying a configuration of a fabrication apparatus.

The scanning speed of a laser may be set within a range that is free from increased fabrication costs and excessively complex apparatus configuration. Specifically, the scanning speed of a laser is preferably 5 mm/s or faster and 25 mm/s or slower, more preferably 10 mm/s or faster and 25 mm/s or slower, further preferably 15 mm/s or faster and 25 mm/s or slower.

The beam diameter of a laser can be appropriately set in accordance with the accuracy of a three-dimensional object to be fabricated.

### 2-3. Additional Notes

At least step 2 is preferably performed under a reduced pressure or an inert gas atmosphere, from a viewpoint of preventing lowering in strength of a three-dimensional object due to oxidizing or nitriding of the metal particles during sintering or fusing. The reduced pressure is preferably 10⁻² Pa or lower, more preferably 10⁻³ Pa or lower. Examples of the inert gases that can be used in the embodiment include nitrogen gas and a noble gas. Among the inert gases, nitrogen (N2) gas, helium (He) gas, or argon (Ar) gas is preferred in view of availability. From a viewpoint of simplifying fabrication steps, both steps 1 and 2 are preferably performed under a reduced pressure or an inert gas atmosphere.

From a viewpoint of further facilitating sintering or fusing of the metal particles, a thin layer of the powder material may be preheated before step 2. The surface of the thin layer can be set to 15°C or lower, preferably 5°C or lower than the melting point of the metal material, for example, by selectively heating a region where an object layer is to be formed or heating the whole inside of the apparatus in advance using a temperature adjustment device, such as a heater.

Further, from a viewpoint of suppressing lowering in dimensional accuracy of an object due to re-melting of a formed object layer, the region where an object layer is to be formed may be selectively cooled or the whole inside of the apparatus may be cooled by a temperature adjustment device.

### 3. Three-dimensional Fabrication Apparatus

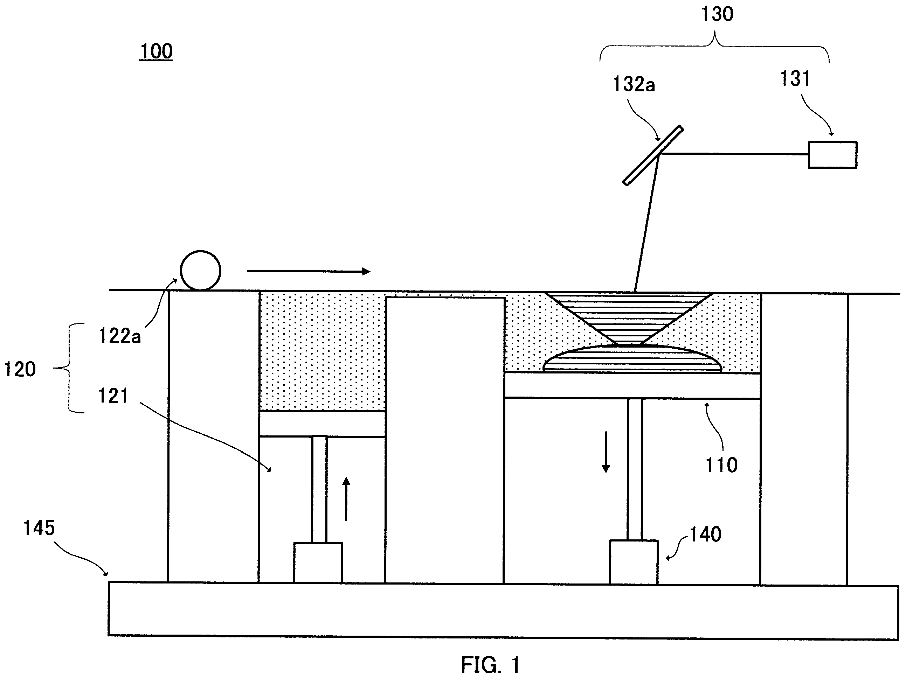

The embodiment pertains to an apparatus for fabricating a three-dimensional object using the above-described powder material. The apparatus of the embodiment can be configured in substantially the same manner as a commonly known apparatus for fabricating a three-dimensional object by a powder bed fusion method except for using the above-described powder material. Specifically, three-dimensional fabrication apparatus 100 of the embodiment includes, as illustrated in FIG. 1 that is a side view schematically illustrating the configuration, build stage 110 positioned inside an opening; thin layer forming section 120 that forms a thin layer of a powder material containing metal particles on the build stage; laser irradiation section 130 that irradiates the thin layer with a laser such that an object layer is formed by sintering or fusing the metal particles; stage support section 140 that supports build stage 110 such that the vertical position is changed; and base 145 that supports each of the above-mentioned sections.

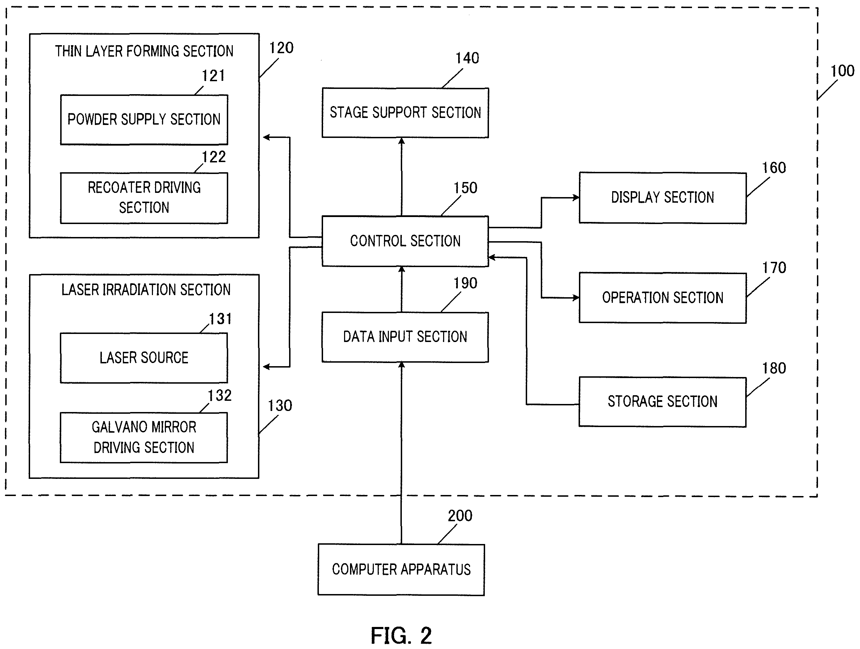

As shown in FIG 2 that illustrates a main part of the control system, three-dimensional fabrication apparatus 100 may include control section 150 that controls thin layer forming section 120, laser irradiation section 130 and stage support section 140 such that an object layer is repeatedly formed and laminated; display section 160 including, for example, a pointing device for displaying various information; operation section 170 for receiving instructions from a user; storage section 180 that stores various information, such as a control program executed by control section 150; and data input section 190 for transmitting/receiving various information including three-dimensional fabrication data to/from an external apparatus. Computer apparatus 200 for creating three-dimensional fabrication data may be connected with three-dimensional fabrication apparatus 100.

A three-dimensional object is fabricated by forming a thin layer by thin layer forming section 120 and irradiating the thin layer with a laser by laser irradiation section 130 to form an object layer on build stage 110, and laminating the object layer.

thin layer forming section 120 can include, for example, powder supply section 121 having an opening, whose edge portion is on substantially the same plane in the horizontal direction as the edge portion of the opening where build stage 110 is elevated/lowered, a powder material reservoir section that extends downward in the vertical direction in the opening, and a supply piston that elevates/lowers inside the opening in the bottom portion of the powder reservoir section; and recoater 122a that spreads a supplied powder material evenly on build stage 110 to form a thin layer of the powder material.

Powder supply section 121 may include a powder reservoir section provided above build stage 110 in the vertical direction and a nozzle such that a powder material is discharged on the same plane in the horizontal direction as the build stage.

Laser irradiation section 130 includes laser source 131 and galvano mirror 132a. Laser irradiation section 130 may further include a lens (not shown) for setting the focal length of a laser on the surface of the thin layer. Laser source 131 may be any light source as long as it emits a laser of the above-mentioned wavelength at the above-mentioned output. Examples of laser sources 131 include a YAG laser source, a fiber laser source, and a CO₂ laser source. Galvano mirror 132a may be composed of an X mirror and a Y mirror for reflecting a laser emitted from laser source 131 and scanning x and y directions with the laser, respectively.

Stage support section 140 supports build stage 110 such that the position in the vertical direction is changed. In other words, build stage 110 is configured to be moved accurately in the vertical direction by stage support section 140. Stage support section 140 can employ various configurations, but can be composed of, for example, a holding member that holds build stage 110, a guide member that guides the holding member in the vertical direction, and a ball screw that engages with a screw hole provided in the guide member.

Control section 150 includes a hardware processor, such as a central processing unit, and controls operations of entire three-dimensional fabrication apparatus 100 during fabrication operations of a three-dimensional object.

Control section 150 may be configured, for example, to convert three-dimensional fabrication data obtained from computer apparatus 200 by data input section 190 into a plurality of slice data that is thinly sliced in the lamination direction of object layers. The slice data is fabrication data of each object layer for fabricating a three-dimensional object. The thickness of the slice data, i.e., the thickness of the object layer, agrees with a distance corresponding to the thickness of one object layer (lamination pitch).

Display section 160 can be a liquid crystal display or an organic EL display, for example.

Operation section 170 can include a pointing device, such as a keyboard or mouse, and may be equipped with a various operation keys, such as a numerical keypad, an execution key, a start key.

Storage section 180 can include various storage media, such as a ROM, a RAM, a magnetic disk, a HDD, and a SSD.

Three-dimensional fabrication apparatus 100 may include pressure-reducing section (not shown), such as a pressure-reducing pump, that reduces pressure inside the apparatus under the control of control section 150, or inert gas supply section (not shown) that supplies an inert gas inside the apparatus under the control of control section 150. Further, three-dimensional fabrication apparatus 100 may include a temperature adjustment device (not shown), such as a heater, that heats inside the apparatus, especially, the top surface of a thin layer of the powder material, under the control of control section 150.

### 3-1. Three-dimensional Fabrication Using Three-dimensional Fabrication Apparatus 100

Control section 150 converts three-dimensional fabrication data obtained from computer apparatus 200 by data input section 190 into a plurality of slice data that is thinly sliced in the lamination direction of object layers. Control section 150 then controls the following operations of three-dimensional fabrication apparatus 100.

Powder supply section 121 drives a motor and a driving mechanism (neither shown) in accordance with supply information, which is output from control section 150, to move a supply piston upward in the vertical direction (arrow direction in FIG. 1), and thus push a powder material on the same plane in the horizontal direction as the build stage.

Subsequently, recoater driving section 122 moves recoater 122a in the horizontal direction (arrow direction in FIG. 1) in accordance with thin layer formation information, which is output from control section 150, to transfer the powder material onto build stage 110 while pressing the powder material such that the thickness of the thin layer becomes the thickness of one object layer.

Laser irradiation section 130 then emits a laser from laser source 131 in a region based on each slice data on the thin layer where a three-dimensional object is to be formed in accordance with laser irradiation information, which is output from control section 150, and drives galvano mirror 132a by galvano mirror driving section 132 to scan with the laser. Through laser irradiation, the metal particles contained in the powder material are sintered or fused to form an object layer.

Afterwards, stage support section 140 drives a motor and a driving mechanism (neither shown) in accordance with position control information, which is output from control section 150, to move build stage 110 downward in the vertical direction (arrow direction in FIG. 1) by a lamination pitch.

Display section 160 displays various information and/or messages to be recognized by a user as needed under the control of control section 150. Operation section 170 receives various input operations by a user and outputs operation signals corresponding to the input operations to control section 150. For example, a virtual three-dimensional object to be formed may be displayed on display section 160 to confirm whether a desired shape is formed, and corrections may be made from operation section 170 if a desired shape is not formed.

Control section 150 stores data in storage section 180 or retrieves data from storage section 180 as needed.

By repeating these operations, object layers are laminated to fabricate a three-dimensional object.

### Examples

Hereinafter, the present invention will be more specifically described with reference to the examples. The examples, however, shall not be construed as limiting the technical scope of the present invention.

### 1. Preparation of Powder Materials

### 1-1. Metal Nanoparticles and Metal Fine Particles

The dispersions of metal nanoparticles having an average particle size of less than 1 µm described in Table 1 were each fed into a container in an amount so as to have a solids content of 100 g, diluted with water to yield dispersions having a solids content of 10 wt%, and mixed with 5.0 g of a styrene-butadiene latex (from JSR Corporation, grade 0602). After a uniformly mixed state of the metal nanoparticles and the latex was visually observed, the content of the container was stirred while heating at 60°C to promote aggregation/fusion. When a predetermined particle size was reached, cooling was started, and then fused fine particles were filtered, washed with water, and dried to yield powder materials 1 to 8.

In Table 1, the numerical values in the column of particle size are particle sizes (unit: nm) reported by the manufacturers. The numerical values in the column of emissivity are emissivities of the metal materials.

**Table 1**

| Table 1: Metal Nanoparticles | | | | |
|---|---|---|---|---|
| No. | Metal Nanoparticle | | | |
| | Material | Particle Size (nm) | Emissivity | Manufacturer, Trade Name |
| 1 | Copper (Cu) | 400 | 0.06 | IOX Co., Ltd., INCu series |
| 2 | Copper (Cu) | 100 | 0.06 | IOX Co., Ltd., INCu series |
| 3 | Copper (Cu) | 30 | 0.06 | IOX Co., Ltd., INCu series |
| 4 | Aluminum (Al) | 400 | 0.13 | Toyo Aluminium K.K., Alpaste WXM |
| 5 | Iron (Fe) | 100 | 0.35 | EM Japan, Co., Ltd., Iron nanoparticle/nanopowder (95 to 105 nm) |
| 6 | Titanium (Ti) | 40 | 0.55 | EM Japan, Co., Ltd., Titanium nanoparticle/nanopowder (30 to 50 nm) |
| 7 | Copper (Cu) | 27 | 0.06 | IOX Co., Ltd., INCu series |
| 8 | Copper (Cu) | 500 | 0.06 | Shoei Chemical Inc. Cu105 |

Powder material 9 was obtained in substantially the same manner as powder materials 1 to 8 except for using copper fine particles having an average particle size of 5,000 nm (trade name: HXR-Cu, from Nippon Atomized Metal Powders Corporation, emissivity: 0.06) instead of the above metal nanoparticles.

Copper fine particles having an average particle size of 31 µm (trade name: LPW Cu, from Aichi Sangyo Co., Ltd.) were used as obtained for powder material 10. Aluminum fine particles having an average particle size of 36 µm (trade name: LPW7050, from Aichi Sangyo Co., Ltd.) were used as obtained for powder material 11.

Table 2 shows average particle sizes and BET specific surface areas of powder materials 1 to 11. The average particle sizes of powder materials 1 to 11 were measured values using a "HELOS" laser diffraction-type particle size analyzer equipped with a wet disperser (from Sympatec GmbH), and the BET specific surface areas were measured values using a "FlowSorb" specific surface area/fine pore analyzer (from Shimadzu Corporation) in accordance with JIS Z 8330 (measurement method of adsorbed gas amount: carrier gas method, adsorptive: nitrogen gas, data analysis method: single-point method). In the remarks column, "porous" refers to porous metal particles prepared by the above processes, and "non-porous" refers to non-porous metal particles without undergoing the above processes.

**Table 2**

| Table 2: Powder Materials | | | | |
|---|---|---|---|---|
| No. | Metal Material | Powder Material | | |
| | | Particle Size (µₘ₎ | BET Specific Surface Area (m²/m³) | Remarks |
| 1 | Copper (Cu) | 32 | 5.0 × 10⁶ | Porous |
| 2 | Copper (Cu) | 33 | 2.6 × 10⁷ | Porous |
| 3 | Copper (Cu) | 35 | 1.1 × 10⁸ | Porous |
| 4 | Aluminum (Al) | 32 | 5.0 × 10⁶ | Porous |
| 5 | Iron (Fe) | 36 | 2.6 × 10⁷ | Porous |
| 6 | Titanium (Ti) | 31 | 8.4 × 10⁷ | Porous |
| 7 | Copper (Cu) | 32 | 1.3 × 10⁸ | Porous |
| 8 | Copper (Cu) | 30 | 4.0 × 10⁶ | Porous |
| 9 | Copper (Cu) | 32 | 1.5 × 10⁶ | Porous |
| 10 | Copper (Cu) | 31 | 0.6 × 10⁶ | non-Porous |
| 11 | Aluminum (Al) | 36 | 0.5 × 10⁶ | non-Porous |

### 2. Fabrication of Objects

Single-layer objects 1 to 11 were each fabricated by spreading powder materials 1 to 11 on a build stage to form a 0.1 mm-thick thin layer, and irradiating the thin layer with a laser from a 50 W fiber laser (from SPI Lasers Limited) equipped with a galvanometer scanner for YAG wavelengths at each laser output under the following conditions.

### [Laser Emission Conditions]

Laser output: 10 W, 20 W, 30 W, 40 W, or 50 W
Laser wavelength: 1.07 µm
Beam diameter: 170 µm on thin layer surface

### [Laser Scanning Conditions]

Scanning speed: 20 mm/sec
Number of lines: 1 line

### [Surrounding Atmosphere]

Temperature: ambient temperature
Gas: argon (Ar) 100%

### 3. Evaluation of Objects

For each of objects 1 to 11, obtained was a ratio of the number of metal particles sintered or fused with adjacent powders to the total number of metal particles observed in an image of a randomly set region obtained by using a commercial scanning electron microscope (trade name: S-3500N, from Hitachi, Ltd.). SEM imaging conditions were set as follows.
Vacuum mode: low vacuum mode
Accelerating voltage: 5 kV
Magnification: 250 times
Time from start of electron irradiation to start of imaging: 3 minutes
Sample: sputtered
Sample stage: aluminum, grounded state

The sintering or fusing state was evaluated in accordance with the following criteria. A: all metal particles observed in SEM image are sintered or fused with adjacent powders B: 50% or more and less than 100% of metal particles observed in SEM image are sintered or fused with adjacent powders
C: less than 50% of metal particles observed in SEM image are sintered or fused with adjacent powders

**Table 3**

| Table 3: Evaluation Results at Each Laser Intensity | | | | | | |
|---|---|---|---|---|---|---|
| | Powder Material No. | Laser Intensity/Sintering or Fusing State | | | | |
| | | 10W | 20 W | 30 W | 40 W | 50 W |
| Ex. 1 | 1 | B | B | A | A | A |
| Ex. 2 | 2 | B | B | A | A | A |
| Ex. 3 | 3 | B | A | A | A | A |
| Ex. 4 | 4 | B | B | A | A | A |
| Ex. 5 | 5 | B | A | A | A | A |
| Ex. 6 | 6 | A | A | A | A | A |
| Comp. Ex. 1 | 7 | B | B | B | B | A |
| Comp. Ex. 2 | 8 | c | B | B | B | A |
| Comp. Ex. 3 | 9 | C | C | C | B | B |
| Comp. Ex. 4 | 10 | c | c | c | B | B |
| Comp. Ex. 5 | 11 | C | C | B | B | A |

When an object was fabricated from a powder material including porous metal particles and having a BET specific surface area of 5.0 × 10⁶ (m²/m³) or more and 1.1 × 10⁸ (m²/m³) or less, the majority of metal particles were connected with adjacent metal particles through sintering or fusing even at a low laser intensity (30 W or lower, for example) (Examples 1 to 6).

In a non-porous form, metal particles composed of a metal material having an emissivity of 0.3 or less did not form a linear sintered body or a fused body unless laser intensity was increased. In a porous form, however, the majority of metal particles were connected with adjacent metal particles through sintering or fusing even at a low laser intensity (30 W or lower, for example) (comparison between Examples 1 to 4 and Comparative Examples 4 and 5).

Moreover, when metal particles contain a metal material having an emissivity of 0.35 or more, the majority of the metal particles was connected with adjacent metal particles through sintering or fusing even at a lower laser intensity (20 W or lower, for example) (Examples 5 and 6).

Further, when metal particles were formed from binder-bonded metal nanoparticles having a particle size of 100 nm or less, the greater majority of a powder material was connected with adjacent powders through sintering or fusing even at a further lower laser intensity (20 W or lower, for example) (Examples 2, 3, 5, and 6).

In contrast, when a three-dimensional object was fabricated from metal particles or a powder material containing non-porous metal particles that have a BET specific surface area of outside the range of 5.0 × 10⁶ (m²/m³) or more and 1.1 × 10⁸ (m²/m³) or less, a fraction of a powder material connected with adjacent powders through sintering or fusing lowered when a laser intensity was low (30 W or lower, for example) (Comparative Examples 1 to 5).

### Industrial Applicability

According to a method and an apparatus of the present invention, fabrication of a three-dimensional object by a powder bed fusion method by a lower-energy laser becomes possible even using a metal material having a high emissivity. Therefore, the present invention is believed to contribute to further widespread use of a powder bed fusion method in the corresponding field.

This application is entitled to and claims the benefit of Japanese Patent Application No. 2015-100061, filed on May 15, 2015, the disclosure of which including the claims, specification, and drawings is incorporated herein by reference in its entirety.

### Reference Signs List

100 Three-dimensional fabrication apparatus
110 Build stage
120 thin layer forming section
121 Powder supply section
122 Recoater driving section
122a Recoater
130 Laser irradiation section
131 Laser source
132 Galvano mirror driving section
132a Galvano mirror
140 Stage support section
145 Base
150 Control section
160 Display section
170 Operation section
180 Storage section
190 Data input section
200 Computer apparatus

## Claims

1. A powder material used for fabrication of a three-dimensional object by selectively irradiating a thin layer of a powder material containing metal particles with a laser beam to form an object layer through sintering or fusing of the metal particles, and laminating the object layer, the powder material comprising:
porous metal particles each formed from metal nanoparticles bonded each other with a binder, wherein
the powder material has a BET specific surface area of 5.0 × 10⁶ (m²/m³) or more and 1.1 × 10⁸ (m²/m³) or less.

2. The powder material according to claim 1, wherein the metal particles contain a metal material having an emissivity of 0.30 or less with respect to 1.07 µm-wavelength light.

3. The powder material according to claim 1 or 2, wherein the metal nanoparticles have an average particle size of 100 nm or less.

4. The powder material according to any one of claims 1 to 3, wherein the binder includes at least one component selected from the group consisting of a thermoplastic resin, a thermosetting resin, and a protein that adsorbs to a metal.

5. A method of fabricating a three-dimensional object, comprising:
forming a thin layer of the powder material according to any one of claims 1 to 4;
forming an object layer by selectively irradiating the thin layer with a laser beam to sinter or fuse the metal particles contained in the powder material; and
laminating the object layers by repeating the forming of the thin layer and the forming of the object layer in this order a plurality of times.

6. A three-dimensional fabrication apparatus comprising:
a build stage;
a thin layer forming section that forms a thin layer of the powder material according to any one of claims 1 to 4 on the build stage;
a laser irradiation section that irradiates the thin layer with a laser to form an object layer by sintering or fusing the metal particles;
a stage support section that supports the build stage such that a vertical position of the build stage is changed; and
a control section that controls the thin layer forming section, the laser irradiation section, and the stage support section such that the object layer is repeatedly formed and laminated.
